# EUROPEAN PATENT SPECIFICATION

(11) **EP 0 513 039 B1**
(45) Date of publication and mention of the grant of the patent: **04.10.1995**
(21) Application number: 91902369.7
(22) Date of filing: 29.01.1991
(51) Int. Cl.: G01C 21/20

(54) **NAVIGATION AID INCLUDING MAP TRANSPARENCY HOLDER**
NAVIGATIONSHILFE MIT HALTER FÜR TRANSPARENTE KARTEN
AIDE DE NAVIGATION AVEC SUPPORT DE CARTES TRANSPARENTES

(30) Priority: 29.01.1990 US 471943; 24.08.1990 US 572753
(43) Date of publication of application: 19.11.1992
(60) Divisional application: 94116572.2
(73) Proprietor: NAVITRAK CORP., Oakville, Ontario L6H 2W2 (CA)
(72) Inventor: HILL, David, Carey, Oakville, Ontario L6H 2W2 (CA)
(74) Representative: Asquith, Anthony
(86) International application number: PCT/CA91/00023
(87) International publication number: WO 91/11683

(56) References cited:
- US-A- 3 094 781
- US-A- 4 149 783
- US-A- 4 422 738

## Description

### TECHNICAL FIELD

This invention relates generally to navigation aids and devices, and particularly to a device for converting map bearings to provide an indication of the true land or sea bearing, the device including a holder for a map transparency.

In reading a map and navigating with a compass, amateur or occasional navigators frequently fail to properly account for magnetic declination, either by neglecting it entirely, or by taking it in the wrong direction, thus producing an error of twice the magnetic declination. More seriously, amateur or occasional navigators may align the compass needle incorrectly or misinterpret the reading or make other similar errors to produce a 180 degree error.

There is a need for a navigation device which facilitates relatively foolproof conversion of map data into a land or sea bearing to be taken.

### BACKGROUND ART

Some prior art devices have used map transparencies mounted in a frame with a lens and rotatable grid, to facilitate obtaining a map bearing. For example, see United States patent no. 3,094,781 (Vangor, 1963).

However, such devices generally accomplish no more than can be accomplished using a protractor on a laid-out paper map, i.e. they merely provide a map bearing. There remains the problem of using a compass to convert the map bearing to the true land or sea bearing.

### DISCLOSURE OF INVENTION

It is thus an object of the invention to provide a navigation device which facilitates relatively foolproof conversion of map data into a land or sea bearing to be taken.

It is a further object of the invention to provide, for the navigation device, a transparency holder which is adapted to permit the insertion of a map transparency in one orientation only.

In the invention, a map transparency, a grid wheel, a counter-rotating direction wheel and a compass are combined in such a fashion such that map information can be directly converted to a land or sea bearing in virtually foolproof fashion.

More particularly, the invention as defined in claim 1 involves, mounted in a case parallel to and aligned with each other, a lens across an opening at one end of the case and a compass, having a body, transparent faces and a magnetic compass needle, across an opening at the opposite end of the case. A transparency holder is positioned between the lens and the compass at a distance from the lens approximating the focal length of the lens, and is adapted to receive a map transparency with magnetic north thereon aligning with a North marking on the case or on the body of the compass. A grid wheel is provided between the transparency holder and the compass, having a transparent or translucent central area inscribed with parallel grid lines and at least one first directional arrow aligned parallel to the grid lines, the grid wheel being in close proximity to the transparency holder such that it is also at a distance from the lens approximating the focal length of the lens. Positioned between the grid wheel and the compass, and geared to the grid wheel for counter-rotation therewith, is a direction wheel having a transparent or translucent central area inscribed with at least one second directional arrow, the first and second directional arrows aligning with each other when pointing towards the North marking or 180 degrees therefrom. A bearing may thus be taken by examining an installed map transparency through the lens, rotating the grid wheel to align the grid lines and the at least one first directional arrow with the desired direction of travel on the map, then aligning the compass needle with the North marking on the body of the compass, the at least one second directional arrow then indicating the bearing to be taken.

Alternatively, as described below, the map transparency could be positioned between the grid wheel and the direction wheel, adjacent the grid wheel.

As described below, the transparency holder has certain asymmetric features which ensure that it can only be installed in the navigation device in the one correct orientation.

Further features of the invention will be described or will become apparent in the course of the following detailed description.

### BRIEF DESCRIPTION OF DRAWINGS

In order that the invention may be more clearly understood, preferred and alternative embodiments thereof will now be described in detail by way of example, with reference to the accompanying drawings, in which:
Fig. 1 is an exploded perspective, showing the various components of the device:

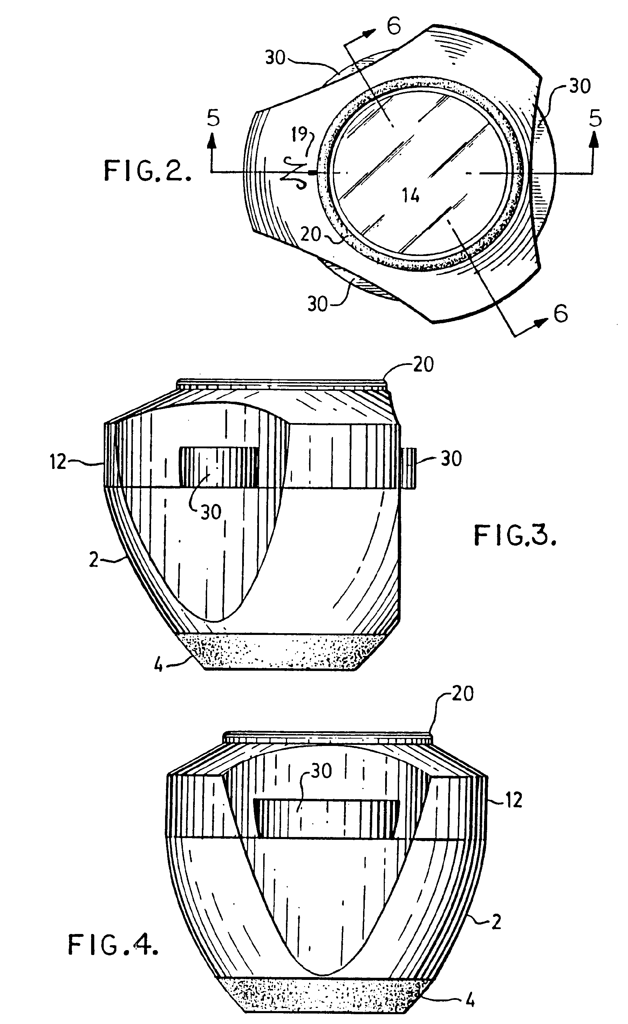

Fig. 2 is a top view of the preferred embodiment of the transparency holder, assembled;
Fig. 3 is a front elevation;
Fig. 4 is side elevation;
Fig. 5 is a cross-section at A-A on Fig. 2;
Fig. 6 is a cross-section at B-B on Fig. 2;

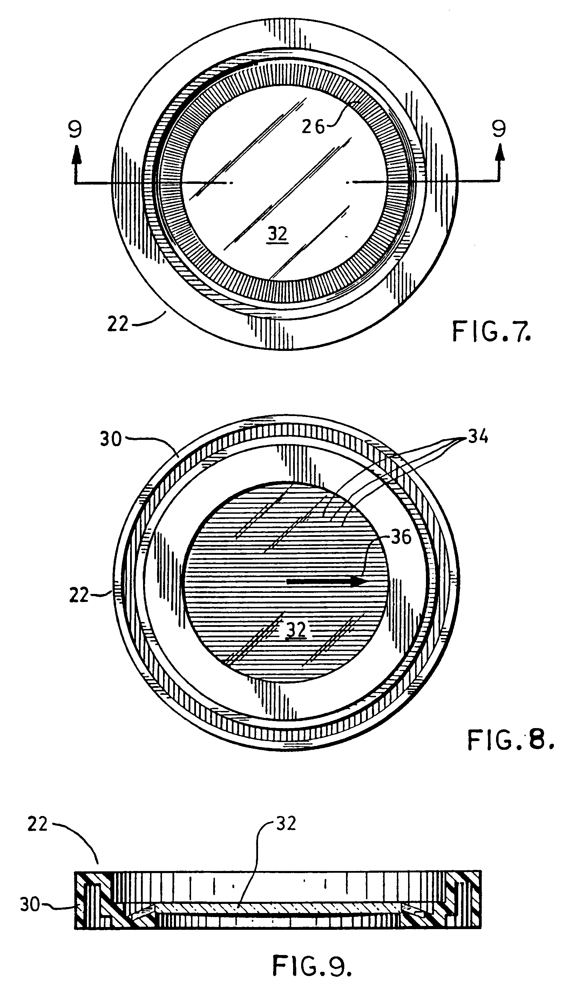

Fig. 7 is a top view of the grid ring;
Fig. 8 is a bottom view of the grid ring;
Fig. 9 is a cross-section at C-C on Fig. 7;

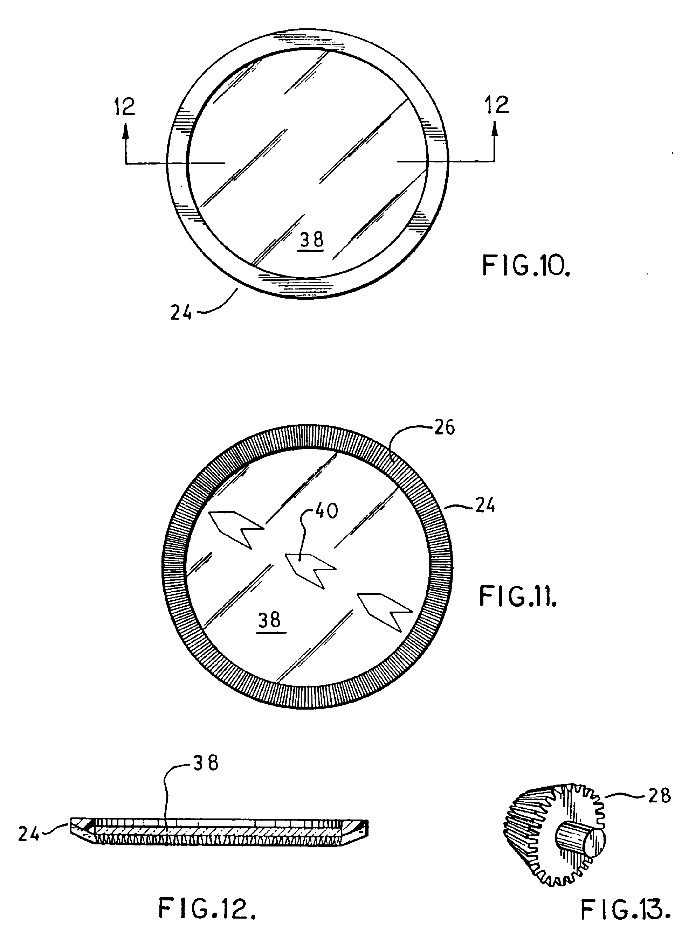

Fig. 10 is a top view of the direction ring;
Fig. 11 is a bottom view of the direction ring;
Fig. 12 is a cross-section at D-D on Fig. 10;
Fig. 13 is a perspective of one of the small gears;
Fig. 14 is a plan view of the preferred transparency holder;
Fig. 15 is a side view of the transparency holder;
Fig. 16 is a top view of the transparency holder, opened;
Fig. 17 is a top view of an alternative embodiment of the transparency holder, assembled;
Fig. 18 is a side view of the transparency holder;
Fig. 19 is a top view of the transparency holder, opened;
Fig. 20 is an exploded perspective, showing the various components of the navigation device, with an alternative transparency holder arrangement; and
Fig. 21 is a perspective showing an alternative embodiment of the case.

### BEST MODE FOR CARRYING OUT THE INVENTION

In the preferred embodiment, the invention is embodied in a case, comprising a lower casing 2 and an upper casing 12. Mounted across the bottom end of the lower casing 2 in a rubber eye piece 4 is a lens 6. A transparency holder 8 is positioned across the upper end of the lower casing, to receive a map transparency 10. The transparency holder is at a distance from the lens approximating the focal length of the lens.

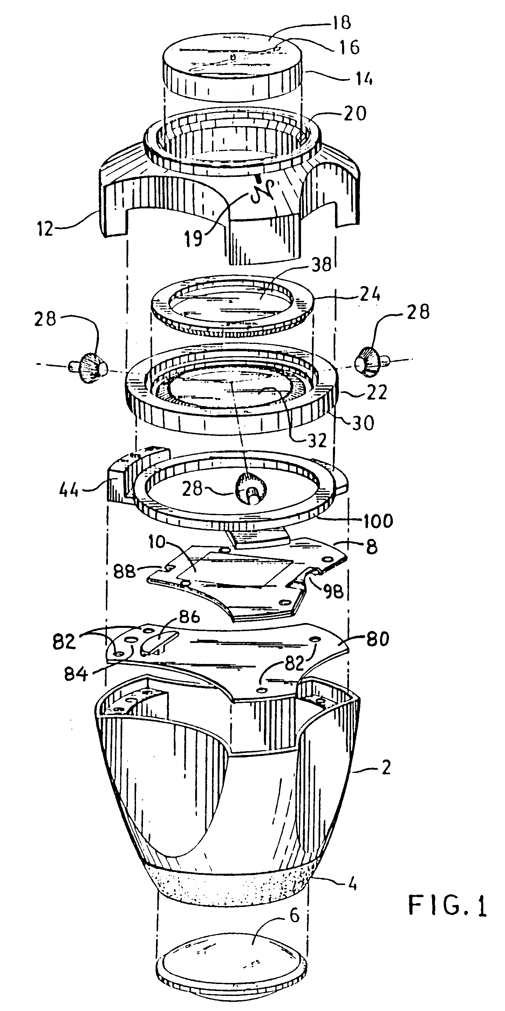

The upper casing 12 is removably fastened to the lower casing 2. A conventional compass 14, having a compass needle 16 mounted on a pin 18, is positioned across the upper end of the upper casing. A "North" or "N" marking 19, or other suitable indicator, is on the upper surface of the compass or, as illustrated in Fig. 1, on the upper casing adjacent the compass. A rubber ring 20 projects axially from the upper end of the upper casing to protect the casing and compass.

A grid wheel 22 and a direction wheel 24 are mounted between the upper and lower casings. The wheels have gear-teethed areas 26. Small gears 28, preferably three in number, are evenly spaced in fixed positions between the gear-teethed areas, rotation of one wheel thus producing counter-rotation of the other. One of the wheels, namely the grid wheel 22 in the illustrated embodiment, has a ring portion 30 projecting outwarding from at least a portion of the upper and lower casings, for use by the user to rotate the wheels.

The grid wheel 22 has a transparent or translucent central portion 32, inscribed with parallel grid lines 34 and at least one first directional arrow 36 aligned parallel to the grid lines. It is in close proximity to the transparency holder, such that it is also at a distance from the lens approximating the focal length of the lens. Thus when the user looks through the lens, both the map transparency and the grid lines are essentially in focus.

The direction wheel 24 has a transparent or translucent central portion 38 inscribed with at least one second directional arrow 40. Since it is spaced from the transparency and grid location by virtue of the small gears 28, the second directional arrow 40 is not seen in focus. The first and second directional arrows align with each other when pointing towards the North marking or 180 degrees therefrom.

Having one or both of the grid wheel and direction wheel with a translucent as opposed to transparent central portion may improve readability of the map transparency by diffusing available light evenly, provided that excessive attenuation is avoided. On the other hand, the invention clearly will work if both are transparent.

The upper and lower casings are fastened to each other in such a way that they can be separated to permit transparencies to be changed, such as by lifting the upper casing out of a detent in the lower casing against the force of a spring, to disengage the casings from each other, and then pivoting the upper casing away from the lower casing.

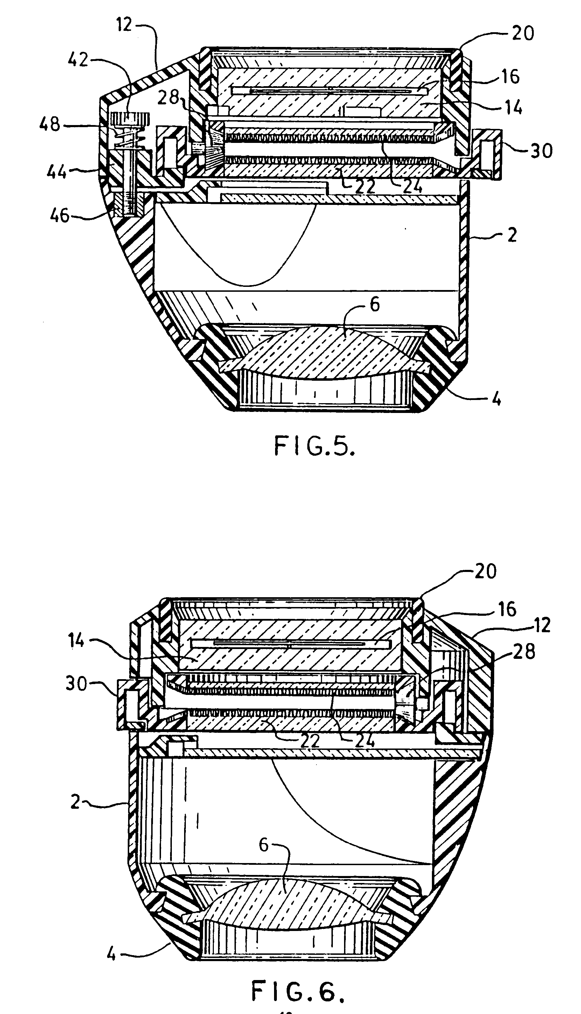

Thus as seen in Fig. 5, the upper and lower casings are fastened to each other via a socket screw 42 passing through a flange 44, and engaging a threaded metal insert 46 in the lower casing. A spring 48 biases the upper casing towards the lower casing. The casings can be separated to permit transparencies to be changed, by lifting the upper casing out of a detent in the lower casing against the force of the spring, to disengage the casings from each other, and then pivoting the upper casing away from the lower casing, about the socket screw 42.

The map transparency 10 must be prepared such that magnetic north is aligned with the N or North marking on the body of the compass.

The device is extremely simple to use. A bearing may be taken by looking at the map transparency through the lens 6, and manipulating the ring 30 so as to thereby rotate the grid wheel 22 and direction wheel 24, to align the grid lines and directional arrows thereon with the desired direction of travel on the map. Then the device is flipped over, and the compass needle is aligned with the North marking on the case (or on the body of the compass). The second directional arrow then indicates the bearing to be taken.

Of course, the transparency must be inserted with the correct orientation. Clear indicia could be marked on the transparency frame, e.g. "This Side Up" and/or "This Edge In", or a pattern on the transparency frame could be matched to a pattern on the transparency support. However, it is preferable to make it physically impossible to insert the transparency incorrectly, for example by using a tapered or asymmetrical transparency frame and complementary support, as shown in Fig. 1.

In the preferred embodiment shown in Figs. 1 and 14-16, the transparency holder 8 is positioned on a transparent transparency support 80 across the upper end of the lower casing. The transparency support is fastened to the lower casing by four screws passing through holes 82. The fifth hole 84 is for the socket screw which connects the upper and lower casings to pass through. On the transparency support is a "tee" 86, positioned off the center line of the transparency support so as to create asymmetry. The transparency holder 8 fits in partly under the tee, with a notch 88 engaging the base of the tee. The top of the tee preferably is spaced from the transparency support by the thickness of the transparency holder, so that the transparency holder is held down against the transparency support.

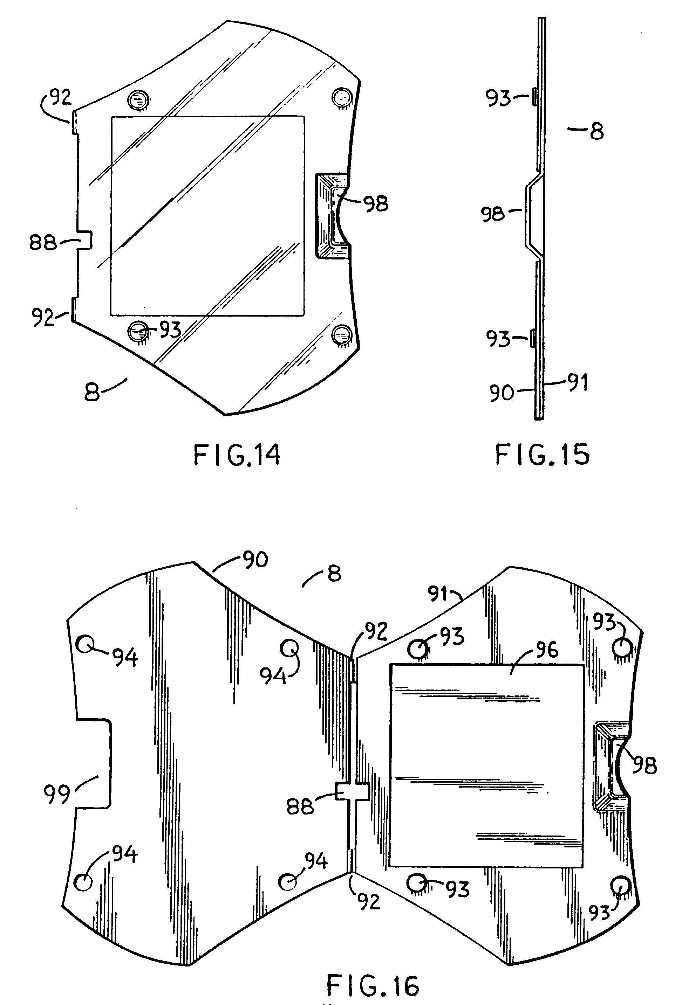

As seen in greater detail in Figs. 14-16, the transparency holder 8 has an upper half 90 and a lower half 91, connected by integral living hinges 92. Four posts 93 snap through corresponding holes 94 to lock the holder closed once a transparency is installed. The transparency holder is of transparent plastic, and has a central portion 96 which is recessed from the inner surface of the lower half 91 by about the thickness of the actual map transparency. The map transparency is inserted in the correct orientation, and then the holder is snapped shut.

The lower half 91 has a finger grip portion 98 which projects upwardly from the lower half through a notch 99 in the upper half. This facilitates insertion and removal of the transparency holders, i.e. to switch maps. The finger grip portion preferably projects upwardly to the same height as the top of the tee 86, and against the underside of the ring 100, so that the transparency holder is securely positioned.

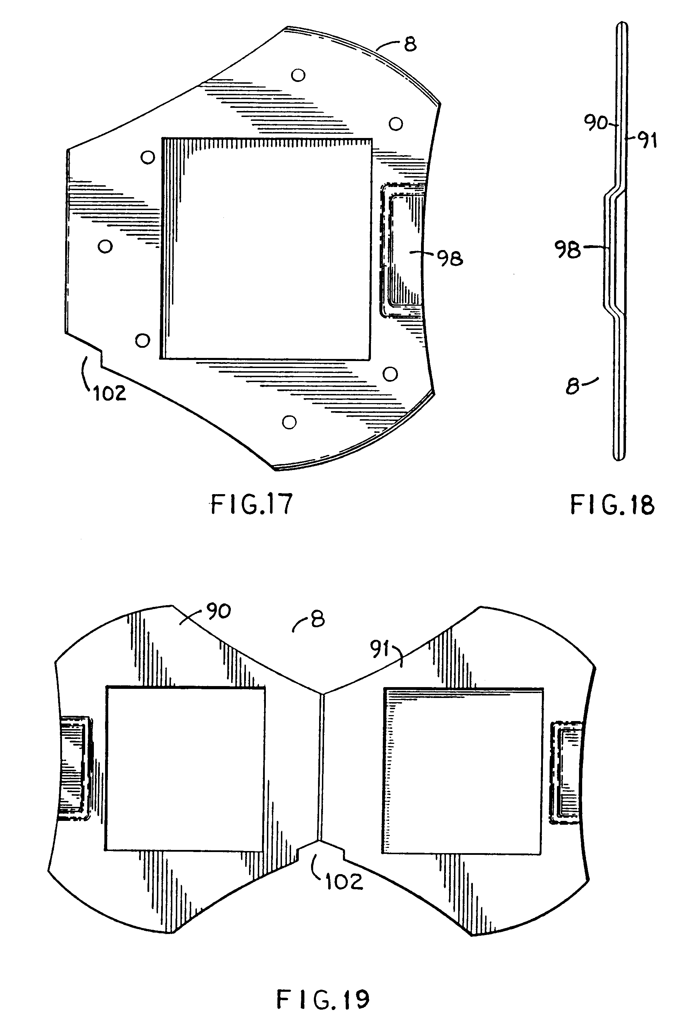

In the alternative embodiment shown in Figs. 17-19, the same principle is used, but instead of the notch 88, a notch 102 is provided at one edge of the hinged portion.

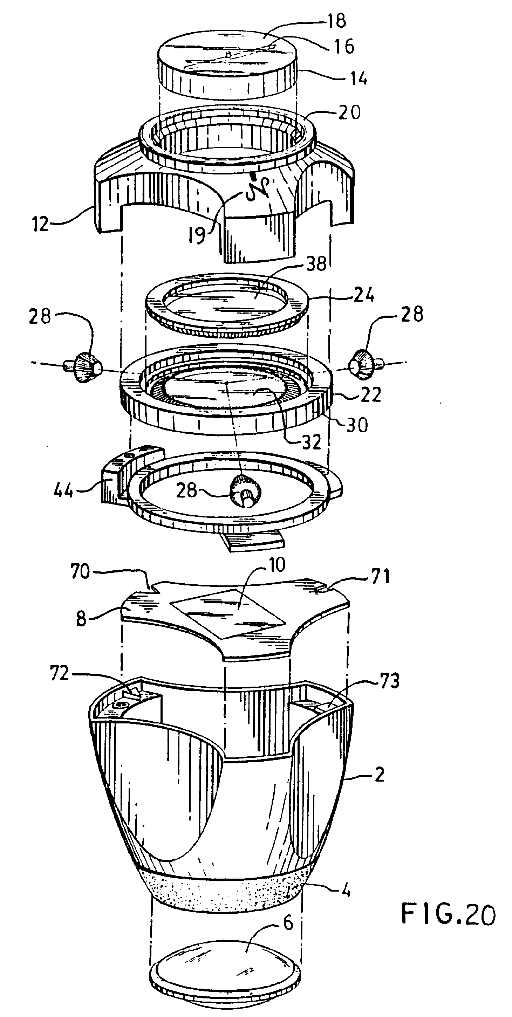

Another alternative embodiment is shown in Fig. 20. In this embodiment, there is no support 80, but merely the transparency holder 8 itself, provided with at least one notch positioned so as to create asymmetry, such as notches 70, 71 matching complementary projections 72, 73 respectively.

The desired asymmetry could obviously be provided by means other than notches. Regardless of the actual construction of the transparency holder or of its location, some form of asymmetry must be provided, whether in the form of notches as described above, or by other means such as making a transparency holder which is generally asymmetrical in shape (as opposed to being generally symmetrical but having asymmetric features such as off-center notches). Such obvious variations are considered to be within the scope of the invention.

It should be appreciated that all of the components of the device should be of plastic or other non-magnetic material, to avoid influencing the compass.

There remains a minor problem, as with all maps, in that for truly accurate readings, the transparencies must be updated periodically to account for the variation of magnetic declination with time. However, in most areas, particularly southern area, such variation is very small, well within the typical margin of error inherent in any map/compass system. Neverthless, if desired, the transparencies could be dated, and a warning could be provided to the user cautioning against the use of outdated transparencies.

It will be appreciated that the above description relates to the preferred embodiment by way of example only. Many variations on the invention will be obvious to those knowledgeable in the field, and such obvious variations are within the scope of the invention as described and claimed, whether or not expressly described.

For example, the transparency itself need not necessarily be oriented to magnetic north. Instead, the transparency support frame could be rotatable and lockable in any position to align the map image on the transparency with magnetic north. However, such a variation, although possible, is not preferred, because it is less foolproof. The transparency could be locked in the wrong position, either through inadvertence or mistake.

As in conventional hand-held transparency viewers, a battery, switch and light (preferably red, or switchable to red by use of a red filter) could be provided to facilitate use of the device at night or in poor lighting conditions. Otherwise, the user has to use a flashlight or other light source, which he or she would have to do in any event using conventional navigation equipment.

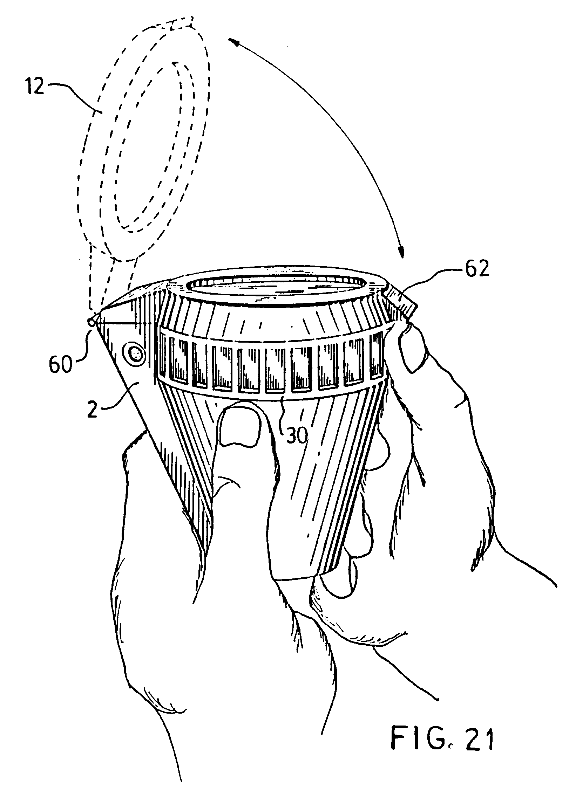

Instead of the upper casing swinging away laterally from the lower casing, it could be connected to the lower casing by a hinge 60 to flip up and open. The connection between the casings could be lockable and unlockable by any suitable means, such as by squeezing spring-loaded buttons, or as shown in Fig. 21, by using an integral clip 62 to snap the upper casing to the lower casing.

The particular structure of the case is not critical. The invention resides in the various components and their arrangement, rather than in the means in which they mounted.

Instead of the map transparency being positioned between the grid wheel and the lens, it should be appreciated that it may be positioned between the grid wheel and the direction wheel, adjacent the grid wheel, although such alternative positioning is slightly more difficult from an assembly viewpoint. The transparency holder has to have slots in it to provide space for the small gears 28. The grid wheel obviously must be transparent rather than merely translucent in such an arrangement.

### INDUSTRIAL APPLICABILITY

The invention provides a navigation device which is quick and easy to use, as well as being virtually foolproof. In addition to facilitating the taking of accurate bearings, the invention facilitates determining positions by bi-angulation or triangulation.

Since it is awkward and in some scenarios almost impossible to manipulate a large map with a compass, particularly if no table or other flat area is readily available, the invention provides a device which is likely to be used routinely, instead of being left at home. Occasions of lost hunters or hikers are thus likely to be less frequent.

Those knowledgeable in the field will readily appreciate other uses and advantages of the invention.

## Claims

1. In a navigation device comprising a case (2, 12) having openings at opposite ends thereof and mounted in said case parallel to and aligned with each other:
a lens (6) across one said opening; and
a compass (14) across the other said opening, having a body, transparent faces and a magnetic compass needle (16), said compass or said case bearing a North marking (19);
the improvement characterized by said case further having mounted therein parallel to and aligned with said lens and said compass:
a grid wheel (22) between said lens and said compass, having a transparent or translucent central area (32) inscribed with at least one first directional arrow (36), at a distance from said lens approximating the focal length of the lens;
positioned between said grid wheel and said compass, and geared to said grid wheel for counter-rotation therewith, a direction wheel (24) having a transparent or translucent central area (38) inscribed with at least one second directional arrow (40) such that said first and second directional arrows align with each other when pointed at said North marking and 180 degrees therefrom; and
a transparency holder (8) adapted to carry a map transparency (10) with magnetic north thereon aligning with said North marking, said transparency holder being in close proximity to said grid wheel such that it is also at a distance from the lens approximating the focal length of the lens;
whereby a bearing may be taken by examining an installed map transparency through said lens, rotating said grid wheel to align said at least one first directional arrow with the desired direction of travel on the map, then inverting said device and aligning said compass needle with said North marking on said case or on the body of the compass, said at least one second directional arrow on said direction wheel then indicating the bearing to be taken.

2. A navigation device as recited in claim 1, further characterized by said grid wheel including a plurality of grid lines (34) across said transparent or translucent central area, parallel to said first directional arrow.

3. A navigation device as recited in claim 1, further characterized by said transparency holder (8) being between said grid wheel (22) and said lens (6).

4. A navigation device as recited in claim 2, further characterized by said transparency holder (8) being between said grid wheel (22) and said lens (6).

5. A navigation device as recited in claim 1, further characterized by said grid wheel (22) being transparent and said transparency holder (8) being between said grid wheel (22) and said direction wheel (24).

6. A navigation device as recited in claim 2, further characterized by said grid wheel (22) being transparent and by said transparency holder (8) being between said grid wheel (22) and said direction wheel (24).

7. A navigation device as recited in claim 1, further characterized by said transparency holder including cooperating projection (72, 73) and notch (70, 71) means on said holder and said casing, whereby said holder may be installed in only one possible orientation.

## Patentansprüche

1. In einem Navigationsgerät, das ein Gehäuse (2, 12) enthält, welches an entgegengesetzten Enden desselben Öffnungen hat und in besagtem Gehäuse parallel zueinander und miteinander in einer Linie befestigt ist, befinden sich: eine Linse (6) über der einen besagten Öffnung; und ein Kompaß (14) über der besagten anderen Öffnung, welcher einen Körper, durchsichtige Seitenflächen und eine magnetische Kompaßnadel (16) hat, wobei besagter Kompaß oder besagtes Gehäuse eine Markierung in Richtung Norden (19) enthält;
in der Verbesserung, gekennzeichnet durch besagtes Gehäuse, sind weiterhin parallel und in einer Linie zu besagter Linse und zu besagtem Kompaß befestigt:
ein Rasterrad (22) zwischen besagter Linse und besagtem Kompaß, welches eine durchsichtige und transparente mittlere Fläche (32) hat, in welche ein erster Richtungspfeil (36) eingetragen ist, wobei der Abstand von besagter Linse etwa der Brennweite der Linse entspricht;
ein Richtungsrad (24), welches zwischen besagtem Rasterrad und besagtem Kompaß angeordnet ist und an besagtes Rasterrad angekoppelt ist, damit es eine Gegenrotation ausführen kann. Dieses Rasterrad hat eine durchsichtige und transparente mittlere Fläche (38), in welche ein zweiter Richtungspfeil (40) eingetragen ist, wobei besagte erste und zweite Richtungspfeile miteinander eine Linie bilden, wenn sie auf besagte Nordmarkierung zeigen und ebenso, wenn sie um 180 Grad verdreht sind;
und
ein Transparenzhalter (8), der so angepaßt ist, daß er eine Kartentransparenz (10) mit magnetischem Norden tragen kann, welcher mit besagter Nordmarkierung eine Linie bildet, wobei besagter Transparenzhalter in unmittelbarer Nähe des besagten Rasterrades angeordnet ist und auch ungefähr soweit entfernt angeordnet ist, wie es der Brennweite der Linse entspricht;
Dadurch kann durch Überprüfen einer eingebauten Kartentransparenz durch besagte Linse ein Winkel gemessen werden, und das besagte Rasterrad kann durch Ausrichtung mindestens des ersten Richtungspfeiles mit der gewünschten Reiserichtung auf der Karte gedreht werden. Dann kann besagtes Gerät umgedreht und besagte Kompaßnadel mit besagter Nordmarkierung auf dem besagten Gehäuse oder auf dem Körper des Kompaßes ausgerichtet werden, wobei dann besagter zweiter Richtungspfeil auf besagtem Richtungsrad andeutet, daß der Winkel gemessen ist.

2. Ein Navigationsgerät, wie es im Hauptanspruch dargelegt ist, weiterhin gekennzeichnet durch besagtes Rasterrad einschließlich einer Vielzahl von Gitterlinien (34) über besagter transparenten oder durchsichtigten mittleren Fläche, parallel zu besagtem ersten Richtungspfeil.

3. Ein Navigationsgerät, wie es im Hauptanspruch dargelegt ist, weiterhin dadurch gekennzeichnet, daß besagter Transparenzhalter (8) zwischen besagtem Rasterrad (22) und besagter Linse (6) angeordnet ist.

4. Ein Navigationsgerät, wie es im 2. Anspruch dargelegt ist, weiterhin dadurch gekennzeichntet, daß besagter Transparenzhalter (8) zwischen besagtem Rasterrad (22) und besagter Linse (6) angeordnet ist.

5. Ein Navigationsgerät, wie es im Hauptanspruch dargelegt ist, weiterhin dadurch gekennzeichntet, daß besagtes Rasterrad (22) transparent ist und besagter Transparenzhalter (8) zwischen besagtem Rasterrad (22) und besagtem Richtungsrad (24) angeordnet ist.

6. Ein Navigationsgerät, wie es im 2. Anspruch dargelegt ist, weiterhin dadurch gekennzeichntet, daß besagtes Rasterrad (22) transparent ist und besagter Transparenzhalter (8) zwischen besagtem Rasterrad (22) und besagtem Richtungsrad (24) angeordnet ist.

7. Ein Navigationsgerät, wie es im Hauptanspruch dargelegt ist, weiterhin dadurch gekennzeichnet, daß besagter Transparenzhalter in gleicher Richtung wirkende Vorsprünge (72, 73) und Einkerbungen (70, 71) auf besagtem Halter und besagtem Gehäuse hat, wodurch besagter Halter nur in einer möglichen Orientierung eingebaut werden kann.

## Revendications

1. Dans un instrument de navigation comprenant une boîte (2, 12) avec des ouvertures à chacune de ses extrémités et, montés dans cette boîte de façon parallèle et alignés l'un avec l'autre:
- une lentille (6) placée transversale à l'une des dites ouvertures; et
- un compas (14) placé transversal à l'autre des dites ouvertures, qui comprend un corps, des faces transparentes et une aiguille de compas (16) magnétique, soit le dit compas soit la dite boîte portant un repère (19) indiquant le Nord; l'amélioration caractérisée par la dite boîte case consistant en ce que cette dernière a encore, montés dans son intérieur et parallèles aux dits lentille et compas et alignés avec eux:
- une roue quadrillagée (22) entre la dite lentille et le dit compas, ayant une région centrale (32) transparente ou translucide sur laquelle est inscrite au moins une première flèche de direction (36), à une certaine distance de la dite lentille représentant approximativement la distance focale de cette lentille;
- positionnée entre la dite roue quadrillagée et le dit compas, et en engagement avec la dite roue grillagées pour un mouvement de contre-rotation avec cette dernière, une roue directionnelle (24) ayant une partie centrale (38) transparente ou translucide, sur laquelle est inscrite une seconde flèche de direction (40) de manière que les dites première et seconde flèches de direction soient alignées l'une avec l'autre lorsque elles pointent dans la direction du dit repère du nord ainsi qu'à 180 degrés de cette direction; et
- support (8) pour un élément transparent adapté pour supporter une diapositive (10) d'une carte avec un nord magnétique qui s'aligne avec le dit repère du nord, le dit support d'élément transparent ou de diapositive étant placé très près de la dite roue quadrillagée de façon à se trouver aussi à une distance de la lentille qui est approximativement la distance focale de cette dernière;
par le moyen duquel il est possible de faire le point en examinant une diapositive de carte installée transversale à la dite lentille, en faisant tourner la dite roue quadrillagée pour aligner la dite au moins une première flèche de direction, sur la carte, avec la direction de déplacement désirée, puis en renversant la dite dispositive et en alignant la dite aiguille de compas avec le dit repère du nord se trouvant soit sur la boîte soit sur le corps du compas, la dite au moins une seconde flèche de direction, sur la dite roue de direction indiquant alors la direction recherchée.

2. Un appareil de navigation comme indiqué à la revendication 1, encore caractérisé en ce que la dite roue quadrillagée comprend une pluralité de lignes de quadrillage (34) à travers sa dite partie centrale transparente ou translucide, qui sont parallèles à la dite première flèche de direction.

3. Un appareil de navigation tel qu'indiqué à la revendication 1, encore caractérisé en ce que le dit support (8) de feuille transparente se trouve entre la roue quadrillagée (22) et la dite lentille (6).

4. Un appareil de navigation tel qu'indiqué à la revendication 2, encore caractérisé en ce que le dit support (8) de feuille transparente se trouve entre la dite roue quadrillagée (22) et la dite lentille (6).

5. Un appareil de navigation tel qu'indiqué à la revendication 1, encore caractérisé en ce que la dite roue quadrillagée (22) est transparente et que le dit support 8 de feuille transparente se trouve entre la dite roue quadrillagée (22) et la dite roue de direction (24).

6. Un appareil de navigation tel qu'indiqué à la revendication 2, encore caractérisé en ce que la dite roue quadrillagée (22) est transparente et en ce que le dit support (8) de feuille transparente se trouve entre la dite roue quadrillagée (22) et la dite roue de direction (24).

7. Un appareil de navigation tel qu'indiqué à la revendication 1, encore caractérisé en ce que le dit support (8) de feuille transparente comprend des projections (72, 73) et des encoches (70, 71) sur le dit support et la dite boîte, à l'aide desquels le dit support ne peut être installé que dans une orientation possible.
